# EUROPEAN PATENT APPLICATION

(11) **EP 3 248 883 A1**
(43) Date of publication of application: **29.11.2017**
(21) Application number: 16175466.8
(22) Date of filing: 21.06.2016
(51) Int. Cl.: B64D 15/16, B64D 15/20

(54) **DE-ICING SYSTEM**

(30) Priority: 26.05.2016 GB 201609639
(71) Applicant: BAE Systems PLC, London SW1Y 5AD (GB)
(72) Inventor: Sillence, Colin David, Rodborough, Gloucestershire, GL5 5DY (GB)
(74) Representative: BAE SYSTEMS plc Group IP Department

(57) **Abstract**

At least part of a vehicle (2) comprising: at least part of an external skin (6) of the vehicle; and a de-icing system, the de-icing system comprising one or more acoustic signal generators (12a-b) coupled to the at least part of the external skin (6). The one or more acoustic signal generators (12a-b) are configured to generate an acoustic signal (14a-b) and cause the acoustic signal (14a-b) to propagate through the at least part of the external skin (6).

## Description

### FIELD OF THE INVENTION

The present invention relates de-icing systems for vehicles.

### BACKGROUND

The accumulation of ice on the surface of a wing of an aircraft can adversely affect the ability of the aircraft to fly. Excessive ice build up may cause an aircraft to crash.

In many aircraft, the detection of ice on the aircraft wings is performed by ground crew or a pilot of that aircraft performing a visual inspection of the aircraft wings before or during flight. If ice is detected, a de-icing system on board the aircraft may be activated to remove ice.

Conventional de-icing systems include those that heat external surfaces of the aircraft thereby causing ice accreted thereon to melt, and also those that apply de-icing fluid to the aircraft skin through orifices in the aircraft skin.

There is a need for improved de-icing systems.

### SUMMARY OF THE INVENTION

In a first aspect, the present invention provides at least part of a vehicle comprising: at least part of an external skin of the vehicle; and a de-icing system, the de-icing system comprising one or more acoustic signal generators coupled to the at least part of the external skin. The one or more acoustic signal generators are configured to generate an acoustic signal and cause the acoustic signal to propagate through the at least part of the external skin.

The at least part of an external skin of the vehicle may define a volume, and the one or more acoustic signal generators may be located within the volume and coupled to an internal surface of the at least part of the external skin.

The de-icing system may include at least two acoustic signal generators coupled to the at least part of the vehicle external skin at different respective positions on the at least part of the vehicle external skin.

The de-icing system may further comprise a controller configured to control the one or more acoustic signal generators to generate acoustic signals in the at least part of the external skin.

The controller may be configured to: determine, for each of the acoustic signal generators, a respective frequency; and control each of the acoustic signal generators to generate an acoustic signal in the at least part of the external skin having the frequency determined for that acoustic signal generator, thereby causing the acoustic signals generated by the acoustic signal generators to constructively interfere at a predetermined point on the at least part of the external skin.

The controller may be configured to: determine, for each of the acoustic signal generators, a respective amplitude; and control each of the acoustic signal generators to generate an acoustic signal in the at least part of the external skin having the amplitude determined for that acoustic signal generator, thereby causing the acoustic signals generated by the acoustic signal generators to produce an oscillation of the at least part of the external skin having a predetermined amplitude.

The de-icing system may further comprise an icing detection system configured to identify a point on the at least part of the external skin at which ice has formed. The predetermined point may be the point on the at least part of the external skin at which ice has formed, identified by the icing detection system.

The controller may be configured to control the one or more acoustic signal generators to vary the frequencies and/or amplitudes of the generated acoustic signals.

The at least part of the vehicle may be at least part of a wing of an aircraft. The one or more acoustic signal generators may be coupled to the at least part of the vehicle external skin such that generated acoustic signals are directed to a leading edge of the at least part of the aircraft wing.

A first acoustic signal generator may be coupled to a portion of the external skin that forms a suction surface of the at least part of the aircraft wing. A second acoustic signal generator may be coupled to a portion of the external skin that forms a pressure surface of the at least part of the aircraft wing.

The at least part of a vehicle may further comprise: an ice detection system configured to detect ice formed on a surface of the at least part of the external skin; and a controller configured to, responsive to the ice detection system detecting ice formed on a surface of the external skin, control the one or more acoustic signal generators to generate an acoustic signal and cause the acoustic signal to propagate through the at least part of the external skin.

In a further aspect, the present invention provides a method of forming at least part of a vehicle. The method comprises: providing at least part of an external skin of the vehicle; and coupling a de-icing system to the at least part of the external skin, including coupling one or more acoustic signal generators to the at least part of the external skin. The one or more acoustic signal generators are configured to generate an acoustic signal and cause the acoustic signal to propagate through the at least part of the external skin.

In a further aspect, the present invention provides a de-icing method comprising: providing at least part of a vehicle, the at least part of the vehicle being in accordance with any of the above aspects; and controlling the one or more acoustic signal generators to generate an acoustic signal and cause the acoustic signal to propagate through the at least part of the external skin.

### BRIEF DESCRIPTION OF THE DRAWINGS

Figure 1 is a schematic illustration (not to scale) showing a side view cross section of the aircraft wing, including an icing prevention system; and
Figure 2 is a process flow chart showing certain steps of a de-icing process.

### DETAILED DESCRIPTION

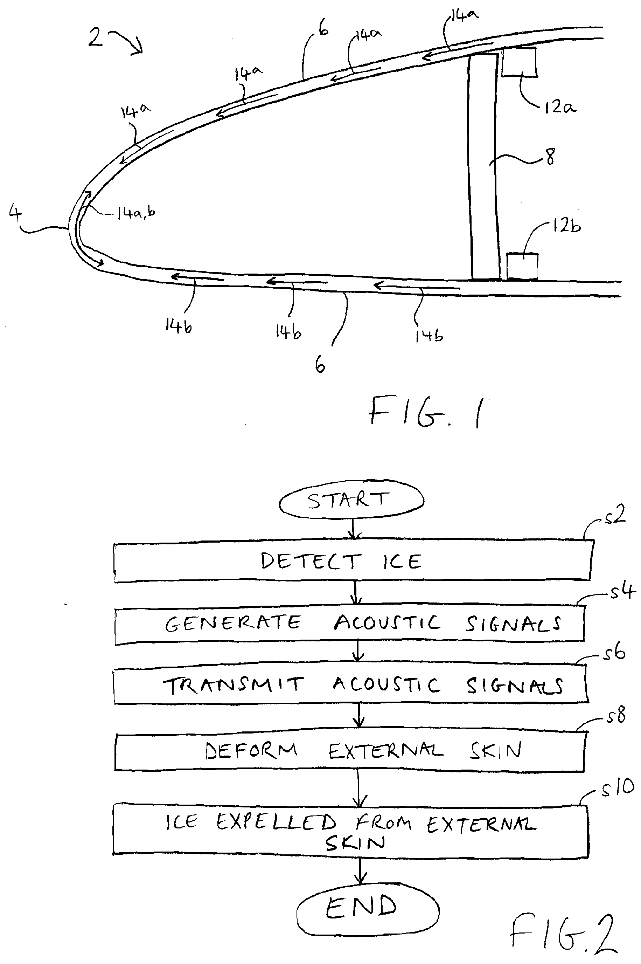

Figure 1 is a schematic illustration (not to scale) of a side view cross section of part of a wing 2 of an aircraft in which an embodiment of an icing prevention system is implemented.

The part of the aircraft wing 2 shown in Figure 1 is a part of the aircraft wing 2 at and proximate to a leading edge 4 of the aircraft wing 2.

The aircraft wing 2 comprises an external skin 6 and a wing spar 8.

In this embodiment, the external skin 6 of the aircraft wing 2 is made of a lightweight and strong material such as a carbon fibre composite (CFC) material, i.e. carbon fibres embedded into a polymer matrix.

The spar 8 forms part of a substructure of the aircraft wing 2. The spar 8 is a structural member of the wing 2 that runs spanwise along the length of the aircraft wing 2 and is attached obliquely to the fuselage of the aircraft 2. The spar 8 is made of a lightweight, strong material such as aluminium or a CFC material. The aircraft wing substructure may include one or more additional spars, and/or ribs attached to the spar 8 or spars.

The external skin 6 is fixedly attached to the substructure of the aircraft wing 2 formed at least in part by the spar 8.

In this embodiment, the aircraft wing 2 has a substantially aerofoil-shaped cross-section defined by the external skin 6.

In this embodiment, the aircraft wing 2 further comprises an icing prevention (or de-icing) system. The icing prevention system comprises two acoustic signal generators 12a, 12b.

In this embodiment, the acoustic signal generators 12a, 12b are located in the wing 2 remotely from the leading edge 4 of the wing 2 such that the spar 8 is located between the leading edge 4 and each of the acoustic signal generators 12a, 12b.

A first acoustic signal generator 12a is coupled to an upper portion of the external skin 6, i.e. a portion of the external skin 6 that forms a suction surface of the aircraft wing 2. The first acoustic signal generator 12a is coupled to an internal surface of the upper portion of the external skin 6.

A second acoustic signal generator 12b is coupled to a lower portion of the external skin 6, i.e. a portion of the external skin 6 that forms a pressure surface of the aircraft wing 2. The second acoustic signal generator 12b is coupled to an internal surface of the lower portion of the external skin 6.

As described in more detail later below with reference to Figure 2, in this embodiment, the acoustic signal generators 12a, 12b are configured to generate acoustic signals within the external skin 6. These acoustic signals and their directions of travel are indicated in Figure 1 by solid arrows and the reference numerals 14a and 14b. In particular, acoustic signals generated by the first acoustic signal generator 12a are indicated by the reference numerals 14a, while acoustic signals generated by the second acoustic signal generator 12b are indicated by the reference numerals 14b.

The acoustic signal generators 12a, 12b may be operatively connected to a controller (not shown in the Figures) for controlling operation of the acoustic signal generators 12a, 12b, for example in response to ice being detected on the external skin 6.

Apparatus, including the controller for controlling operation of the acoustic signal generators 12a, 12b, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 2 is a process flow chart showing certain steps of a de-icing process.

At step s2, ice formation on the external surface of the leading edge 4 of the aircraft wing 2 is detected. Any appropriate ice detection system may be used to detect ice formed on the leading edge 4. Preferably, an automatic ice detection system is implemented. The automatic ice detection system may comprise a sensor or an array of sensors which may be arranged across at least part of the leading edge 4.

At step s4, in response to the detection of ice at the leading edge 4, the acoustic signal generators 12a, 12b generate acoustic signals within the external skin 6.

In particular, the first acoustic signal generator 12a generates the first acoustic signal 14a in the upper portion of the external skin 6 to travel in the direction of the leading edge 4. Similarly, the second acoustic signal generator 12b generates the second acoustic signal 14b in the lower portion of the external skin 6 to travel in the direction of the leading edge 4.

At step s6, the first and second acoustic signals 14a, 14b propagate through the external skin to the leading edge 4 from the first and second acoustic signal generators 12a, 12b respectively.

At step s8, the first and second acoustic signals 14a, 14b travelling through the external skin 6 at the leading edge 4 cause the external skin 6 at the leading edge to move, i.e. to deform or deflect, at least to some extent.

In some embodiments, the frequencies of the first and second acoustic signals 14a, 14b are selected so that the first and second acoustic signals 14a, 14b constructively interfere at or proximate to the leading edge 4. Constructive interference between the first and second acoustic signals 14a, 14b at the leading edge 4 tends to cause the external skin 6 at the leading edge 4 to oscillate with greater amplitude than either of the individual acoustic signals 14a, 14b, for example, with an amplitude substantially equal to the sum of the amplitudes of the first and second acoustic signals 14a, 14b at the leading edge 4. Thus, a greater amplitude of oscillation of the external skin 6 tends to be achievable compared to, for example, using a single acoustic signal generator 12a, 12b.

In some embodiments, the frequencies of the first and second acoustic signals 14a, 14b are selected so that the first and second acoustic signals 14a, 14b constructively interfere at a particular position or positions along the external skin, for example, at or proximate to the leading edge.

For example, in some embodiments, a point or points on the external skin at which ice has accreted may be identified, for example, using automatic ice detection means which may comprise a sensor or an array of sensors which may be arranged across at least part of the leading edge 4. The controller of the acoustic signal generators 12a, 12b may determine, using the identified point or points, frequencies for the first and second acoustic signals 14a, 14b that would cause the first and second acoustic signals 14a, 14b to constructively interfere at the identified point or points. Determination of the frequencies may include using a distance along the external skin from each of the acoustic signal generators 12a, 12b to the identified point or points.

In some embodiments, one or more properties of the accreted ice may be determined e.g. using automatic ice detection means which may comprise a sensor or an array of sensors arranged across the leading edge 4. Example ice properties include, but are not limited to, thickness and composition of the ice. The controller of the acoustic signal generators 12a, 12b may determine, using the measured ice properties, frequencies for either or both of the first and second acoustic signals to provide efficient de-icing.

In some embodiments, the acoustic signal generators 12a, 12b are controlled such that the frequencies of either or both of the first and second acoustic signals 14a, 14b are varied. By varying the frequencies of either or both of the first and second acoustic signals 14a, 14b, the position or positions along the external skin 6 at which the first and second acoustic signals 14a, 14b constructively interfere may be varied. For example, in some embodiments, the frequencies of either or both of the first and second acoustic signals 14a, 14b are varied to "sweep" a point or points along the external skin 6 at which the first and second acoustic signals 14a, 14b constructively interfere over the leading edge 4.

In some embodiments, the frequencies and/or the amplitudes of the first and second acoustic signals 14a, 14b are selected to provide that the external skin 6 deflects by a predetermined distance, for example, at a predetermined position or positions along the external skin 6. For example, in some embodiments, the controller of the acoustic signal generators 12a, 12b may determine amplitudes for the first and second acoustic signals 14a, 14b that would cause the external skin 6 to oscillate with predetermined amplitude. Frequencies of the first and second acoustic signals 14a, 14b may also be determined such that the external skin 6 oscillates with the predetermined amplitude at a predetermined position along the external skin 6, for example, at or proximate to the leading edge 4. The determination of the amplitudes and/or frequencies of the acoustic signals 14a, 14b may include using a damping coefficient or damping ratio of the external skin 6 or other wing structure, or other measurement of the damping effect of the external skin 6 or another wing structure on the acoustic signals 14a, 14b.

Thus, at step s8 the ice accreted on the external surface of the leading edge 4 tends to be moved by the oscillation of the external skin 6 of the leading edge 4.

At step s10, the deformation of the external skin 6 and ice formed thereon at the leading edge 4 causes that ice to be expelled, or shed, from the leading edge 4, i.e. away from the aircraft 2. Deformation of the external skin 6 tends to crack any ice that has formed on the leading edge 4 which may then be removed from the aircraft wing 4 by airflow over the wing 2.

Thus, a de-icing process is provided.

The above described system and method advantageously tends to detect and remove ice that forms on the external surface of an aircraft wing.

The de-icing action may be selectively performed, for example based upon detection of ice. Thus, the de-icing operation tends not to be performed continuously and only when needed.

The above described de-icing system and method advantageously tend to avoid a need for an aircraft to carry de-icing fluid, and tends to mitigate risks associated with running out of de-icing fluid in flight.

The above described de-icing system and method advantageously tend to avoid a need for heating elements to be integrated in an aircraft wing.

It should be noted that certain of the process steps depicted in the flowchart of Figure 2 and described above may be omitted or such process steps may be performed in differing order to that presented above and shown in Figure 2. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the icing prevention system is implemented on an aircraft. However, in other embodiments, the icing prevention system is implemented on a different type of vehicle such as a land-based, or sea-based vehicle.

In the above embodiments, the icing prevention system is implemented at a leading edge of an aircraft wing. However, in other embodiments, the icing prevention system is implemented at a different location on the aircraft.

In the above embodiments, there are two acoustic signal generators. However, in other embodiments, there are a different number of acoustic signal generators, for example more than two acoustic signal generators. In some embodiments, multiple acoustic signal generators may be disposed at intervals along the length of the aircraft wing.

In the above embodiments, the acoustic signal generators are located in the wing such that they are spaced apart from the leading edge beyond the spar. However, in other embodiments, one or more of the acoustic signal generators are located at a different position within the aircraft wing. For example, in some embodiments, one or more of the acoustic signal generators are coupled to the external skin at a different location in the aircraft wing, for example, within the volume defined by the external skin and the spar. Locating the acoustic signal generators closer to the leading edge advantageously tends to reduce the amplitude of the acoustic signal needed to deflect or deform the external skin at the leading edge by a given amount.

## Claims

1. At least part of a vehicle comprising:
at least part of an external skin of the vehicle; and
a de-icing system, the de-icing system comprising one or more acoustic signal generators coupled to the at least part of the external skin; wherein
the one or more acoustic signal generators are configured to generate an acoustic signal and cause the acoustic signal to propagate through the at least part of the external skin.

2. At least part of a vehicle according to claim 1, wherein the at least part of an external skin of the vehicle defines a volume, and the one or more acoustic signal generators are located within the volume and coupled to an internal surface of the at least part of the external skin.

3. At least part of a vehicle according to claim 1 or 2, wherein the de-icing system includes at least two acoustic signal generators coupled to the at least part of the vehicle external skin at different respective positions on the at least part of the vehicle external skin.

4. At least part of a vehicle according to any of claims 1 to 3, wherein the de-icing system further comprises a controller configured to control the one or more acoustic signal generators to generate acoustic signals in the at least part of the external skin.

5. At least part of a vehicle according to claim 4 when dependent on claim 3, wherein the controller is configured to:
determine, for each of the acoustic signal generators, a respective frequency; and
control each of the acoustic signal generators to generate an acoustic signal in the at least part of the external skin having the frequency determined for that acoustic signal generator, thereby causing the acoustic signals generated by the acoustic signal generators to constructively interfere at a predetermined point on the at least part of the external skin.

6. At least part of a vehicle according to claim 5 or claim 4 when dependent on claim 3, wherein the controller is configured to:
determine, for each of the acoustic signal generators, a respective amplitude; and
control each of the acoustic signal generators to generate an acoustic signals in the at least part of the external skin having the amplitude determined for that acoustic signal generator, thereby causing the acoustic signals generated by the acoustic signal generators to produce an oscillation of the at least part of the external skin having a predetermined amplitude.

7. At least part of a vehicle according to claim 5 or 6, wherein:
the de-icing system further comprises an icing detection system configured to identify a point on the at least part of the external skin at which ice has formed; and
the predetermined point is the point on the at least part of the external skin at which ice has formed identified by the icing detection system.

8. At least part of a vehicle according to any of claims 4 to 7, wherein the controller is configured to control the one or more acoustic signal generators to vary the frequencies and/or amplitudes of the generated acoustic signals.

9. At least part of a vehicle according to any of claims 1 to 8, wherein the at least part of the vehicle is at least part of a wing of an aircraft.

10. At least part of a vehicle according to claim 9, wherein the one or more acoustic signal generators are coupled to the at least part of the external skin such that generated acoustic signals are directed to a leading edge of the at least part of the aircraft wing.

11. At least part of a vehicle according to claim 9 or 10, wherein a first acoustic signal generator is coupled to a portion of the external skin that forms a suction surface of the at least part of the aircraft wing, and a second acoustic signal generator is coupled to a portion of the external skin that forms a pressure surface of the at least part of the aircraft wing.

12. At least part of a vehicle according to any of claims 1 to 11, further comprising:
an ice detection system configured to detect ice formed on a surface of the at least part of the external skin; and
a controller configured to, responsive to the ice detection system detecting ice formed on a surface of the external skin, control the one or more acoustic signal generators to generate an acoustic signal and cause the acoustic signal to propagate through the at least part of the external skin.

13. A method of forming at least part of a vehicle, the method comprising:
providing at least part of an external skin of the vehicle; and
coupling a de-icing system to the at least part of the external skin, including coupling one or more acoustic signal generators to the at least part of the external skin; wherein
the one or more acoustic signal generators are configured to generate an acoustic signal and cause the acoustic signal to propagate through the at least part of the external skin.

14. A de-icing method comprising:
providing at least part of a vehicle, the at least part of the vehicle being in accordance with any of claims 1 to 12; and
controlling the one or more acoustic signal generators to generate an acoustic signal and cause the acoustic signal to propagate through the at least part of the external skin.
